# EUROPEAN PATENT SPECIFICATION

(11) **EP 2 741 405 B1**
(45) Date of publication and mention of the grant of the patent: **28.11.2018**
(21) Application number: 12819343.0
(22) Date of filing: 26.04.2012
(51) Int. Cl.: H02K 23/66, H02K 5/14, H02K 5/04

(54) **END COVER ASSEMBLY STRUCTURE OF MOTOR WITH BRUSH**
ENDKAPPENANORDNUNGSSTRUKTUR FÜR EINEN BÜRSTENMOTOR
STRUCTURE D'ENSEMBLE FLASQUE TERMINAL DE MOTEUR À BALAI

(30) Priority: 02.08.2011 CN 201120277812 U
(43) Date of publication of application: 11.06.2014
(73) Proprietor: Zhongshan Broad-Ocean Motor Manufacturing Co., Ltd., Guangdong 528411 (CN)
(72) Inventor: HU, Hui, Zhongshan Guangdong 528411 (CN)
(74) Representative: Hryszkiewicz, Danuta
(86) International application number: PCT/CN2012/074766
(87) International publication number: WO 2013/016964

(56) References cited:
- EP-A1- 0 612 137
- WO-A2-2010/032185
- CN-A- 1 780 103
- CN-A- 101 529 700
- CN-U- 202 178 689
- CN-Y- 2 938 541
- DE-A1-102006 049 529
- DE-A1-102007 059 555
- GB-A- 2 365 631
- US-A- 3 924 147
- US-A- 5 714 826
- US-A1- 2011 095 630

## Description

The invention relates to an end cover assembly for a brush motor.

For a typical permanent magnet DC brush motor, electronic components are usually installed on a brush holder or an end cover. When the leaky-wave rectifying and anti-jamming functions are added for the motor, some electronic components are required to be added inside the motor for meeting the demand. However, inner space of the motor is limited, and the required electronic components fail to be installed on the end cover or the brush holder, moreover, the operation is inconvenient, the production efficiency is low, and some quality risks also exist.

For example, GB 2365631 A discloses a universal motor including an end bracket, a brush, a brush holder, and a circuit board. The brush holder is disposed on the end bracket and is adapted to receive the brush. The circuit board is directly disposed on the end bracket, such that the space between the circuit board and the end bracket is limited.

In addition, US 3924147 A discloses a motor sub-assembly that includes an insulating plate, an end bell, and a printed circuit including electronic components. The end bell covers one side of the insulating plate; the printed circuit is disposed on the opposite side of the insulating plate; such that the electronic components are not installed on the end bell.

In addition, WO 2010032185 A2 discloses an electric motor including a cover, a brush holder sleeve, a brush, and a board. The brush holder sleeve is disposed on the board and is adapted to receive the brush. The cover and the board are directly in contact with each other to guarantee the maximum heat exchange, such that the space between the cover and the board is limited.

In view of the above-described problems, it is one objective of the invention to provide an end cover assembly for a brush motor that integrates the electric components on the circuit board, has a simple and convenient structure that is easy to produce, thereby improving the production efficiency, and effectively solving the problems of the limited space inside the motor.

To achieve the above objective, in accordance with one embodiment of the invention, there is provided an end cover assembly for a brush motor comprising: an end cover; a brush holder, the brush holder holding a brush; and a circuit board, the circuit board comprising an electronic component. The brush holder is disposed on the end cover. The circuit board is clamped on the brush holder, and a cavity is formed between the circuit board and the brush holder. The brush is disposed on the brush holder inside the cavity and is in electric connection with
disposed on the end cover. The end cover assembly for a brush motor further comprises the circuit board installed with electronic components. The circuit board is clamped on the brush holder to form the cavity. The brush is disposed inside the cavity and is in electric connection with the circuit board. The invention integrates the electric components on the circuit board, has a simple and convenient structure that is easy to produce, thereby improving the production efficiency, and effectively solving the problems of the limited space inside the motor.
2) The end surface of the brush holder is convex upward in the axial direction to form the bearing support. The clamp is disposed on the brush holder close to the outer side of the bearing support. The circuit board is disposed on the bearing support and is clamped by the clamp. Thus, the circuit board is easy to disassemble.
3) The lug boss is arranged on the brush holder close to one side of the brush box. The spring is wound on the lug boss. One end of the spring is clamped on the brush box, and the other end of the spring presses against the rear part of the brush. The structure is reasonably and compactly designed.
   FIG. 1 is a stereogram of an end cover assembly for a brush motor in accordance with one embodiment of the invention;
   FIG. 2 is an exploded view of an end cover assembly for a brush motor in accordance with one embodiment of the invention;
   FIG. 3 is a section view of an end cover assembly for a brush motor in accordance with one embodiment of the invention;
   FIG. 4 is an enlarged view of part A-A of FIG. 3; and
   FIG. 5 is an exploded view of a circuit board, an end cover, and a brush holder in accordance with one embodiment of the invention.

For further illustrating the invention, experiments detailing an end cover assembly for a brush motor are described below. It should be noted that the following examples are intended to describe and not to limit the invention.

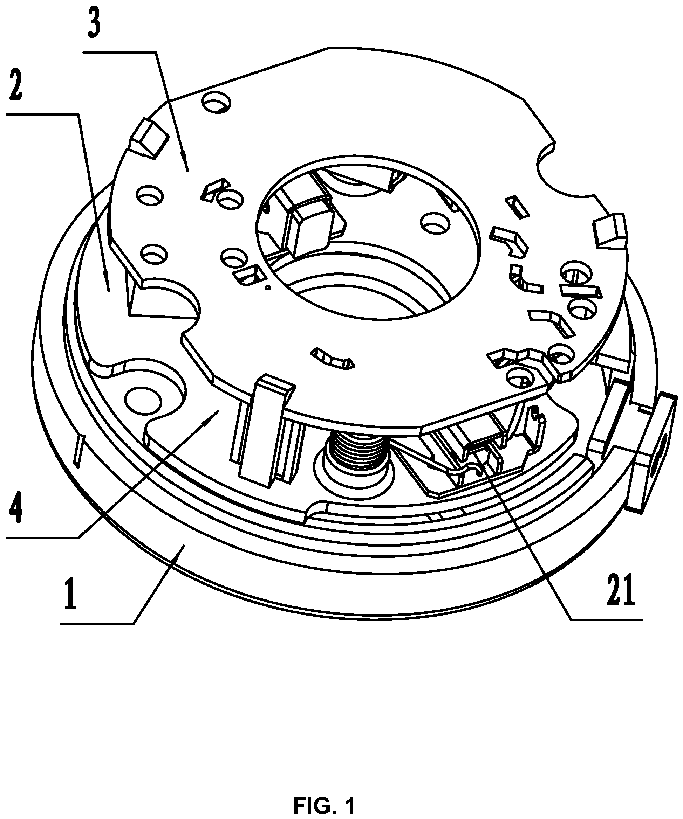

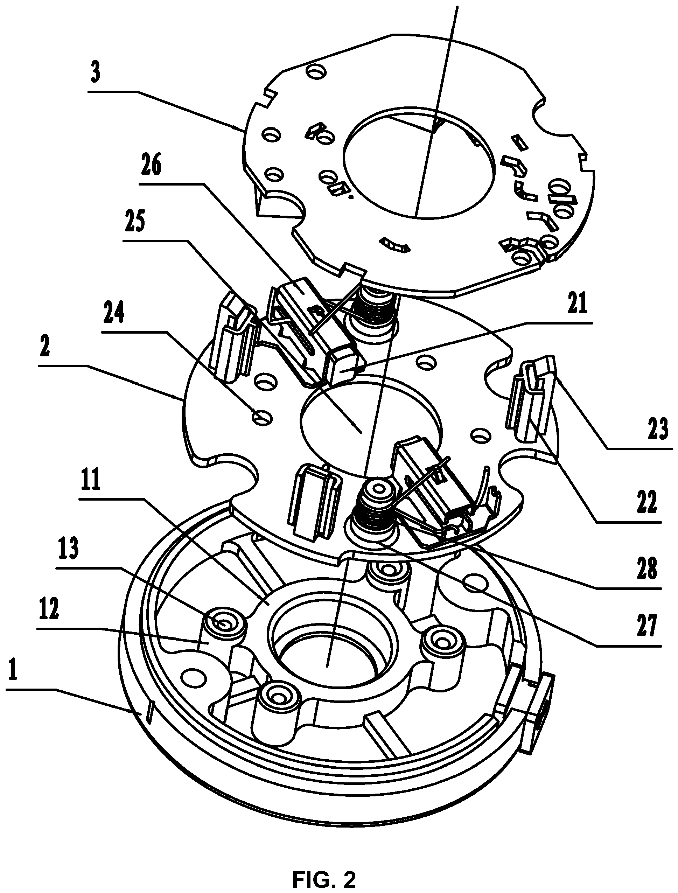

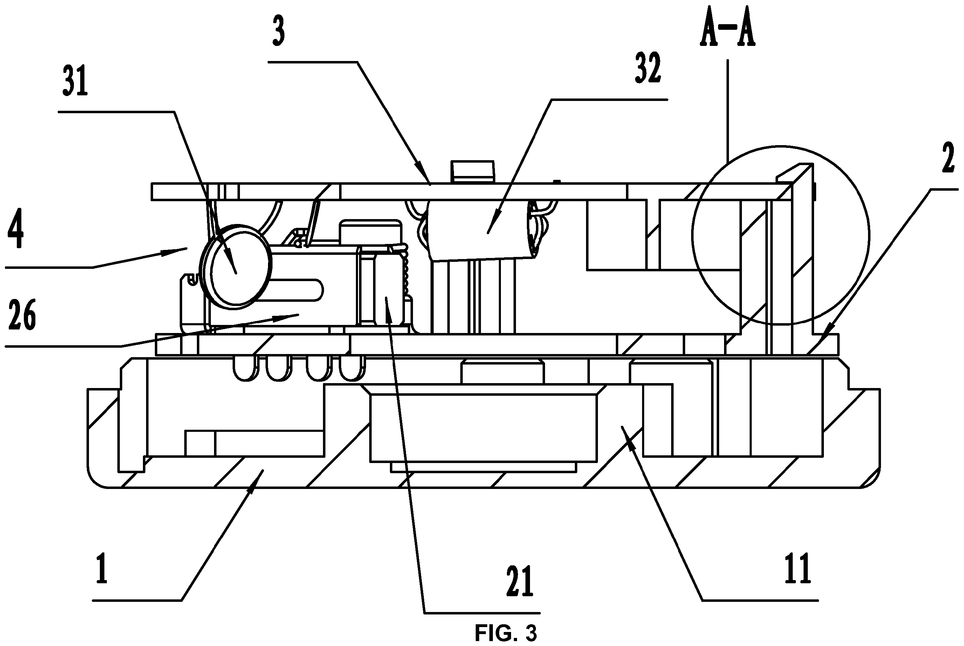

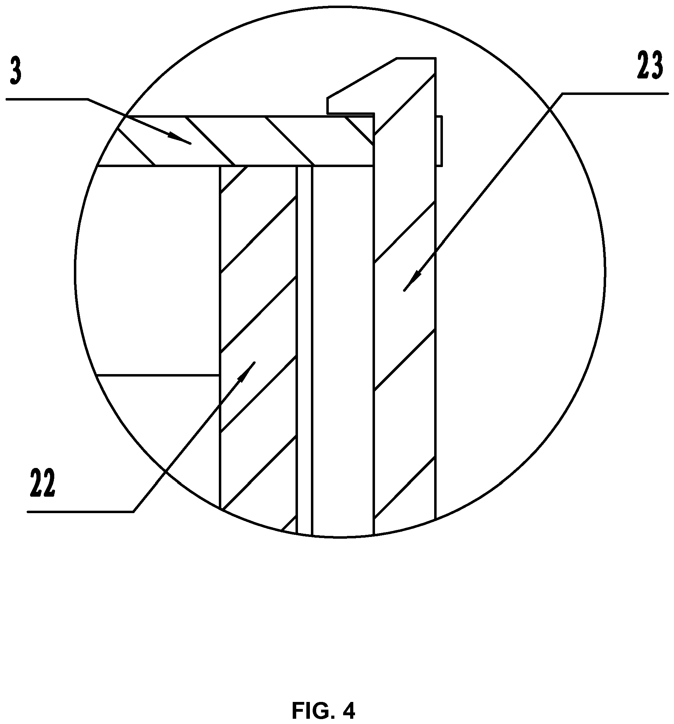

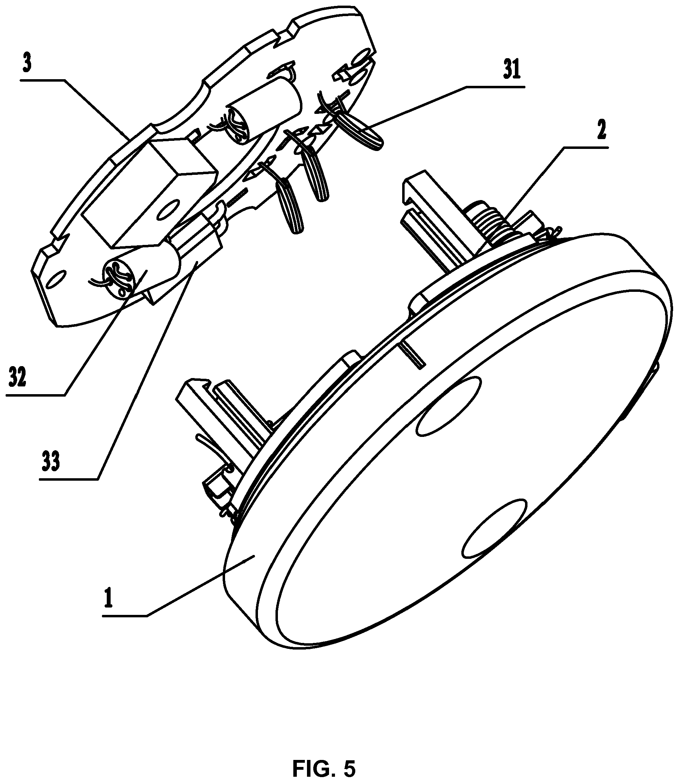

As shown in FIGS.1-5, an end cover assembly for a brush motor comprises: an end cover 1, and a brush holder 2 provided with a brush 21. The brush holder 2 is disposed on the end cover 1. The end cover assembly for a brush motor further comprises a circuit board 3 installed with electronic components. The circuit board 3 is clamped on the brush holder 2 to form a cavity 4. The brush 21 is disposed inside the cavity 4 and is in electric connection with the circuit board 3.

An end surface of the brush holder 2 is convex upward in an axial direction to form a bearing support 22. A clamp 23 is disposed on the brush holder 2 close to an outer side of the bearing support 22. The circuit board 3 is disposed on the bearing support 22 and is clamped by the clamp 23.

A bearing chamber 11 is disposed on a middle part of the end cover 1. A bottom surface of the end cover 1 outside the bearing chamber 11 is convex to form a plurality of mounting columns 12. A threaded hole 13 is disposed on a middle part of each of the mounting columns 12. The brush holder 2 is provided with a mounting hole 24. A screw bolt is inserted into the mounting hole 24 of the brush holder 2 and is screwed into the threaded hole for locking the brush holder 2 on the end cover 1.

A through hole 25 is arranged on a middle part of the brush holder 2. A brush box 26 is disposed on the brush holder 2 on two sides of the through hole 25. The brush box 26 is disposed inside the cavity 4. The brush 21 is embedded in the brush box 26.

A lug boss 27 is arranged on the brush holder 2 close to one side of the brush box 26. A spring is wound on the lug boss 27. One end of the spring 28 is clamped on the brush box 26, and the other end of the spring 28 presses against a rear part of the brush 21.

The electronic component comprises: a capacitor 31, an inductor 32, and a sensor 33. The capacitor 31, the inductor 32, and the sensor 33 are arranged on the circuit board 3 inside the cavity 4 by welding. Pins of the capacitor 31, the inductor 32, and the sensor 33 and the circuit board 3 are coated with insulation paste, thereby preventing the electronic components from short-circuit.

The leaky-wave rectifying and anti-jamming electronic components are welded on the circuit board 3 of the invention. The circuit board 3 is insulated separately, and then clamped on the brush holder 2. A cavity 4 is formed between the brush holder 2 and the circuit board 3. The brush 21 is disposed in the cavity 4 and in electric connection with the electronic components on the circuit board. The invention has a simple structure, is convenient and easy to produce, and is applicable in a motor having a limited inner space.

## Claims

1. An end cover assembly for a brush motor, the end cover assembly comprising:
a) an end cover (1);
b) a brush (21), the brush (21) being embedded in a brush box (26); and
c) a circuit board (3), the circuit board (3) comprising a bottom surface, a top surface, and an electronic component;
**characterized in that**
the end cover assembly further comprises a brush holder (2), a plurality of bearing supports (22), and a plurality of clamps (23), and the brush holder (2) comprises a top surface;
a bottom end of each of the plurality of bearing supports (22) is disposed on the top surface of the brush holder (2), and a top end of each of the plurality of bearing supports (22) is disposed on the bottom surface of the circuit board (3);
a bottom end of each of the plurality of clamps (23) is disposed on the top surface of the brush holder (2), and a top end of each of the plurality of clamps (23) is disposed on the top surface of the circuit board (3);
the circuit board (3) is clamped by the top end of each of the plurality of bearing supports (22) and the top end of each of the plurality of clamps (23);
the brush holder (2) is disposed on the end cover (1);
the brush box (26) and the brush (21) are disposed on the top surface of the brush holder (2), and the electronic component is disposed on the bottom surface of the circuit board (3);
the brush holder (2) and the circuit board (3) are spaced by the plurality of bearing supports (22), and a cavity (4) is formed between the circuit board (3) and the brush holder (2); and
the brush (21) is in electric connection with the circuit board (3).

2. The end cover assembly of claim 1, **characterized in that**
a bearing chamber (11) is disposed on a middle part of the end cover (1);
a bottom surface of the end cover (1) outside the bearing chamber (11) is convex to form a plurality of mounting columns (12);
a threaded hole (13) is disposed on a middle part of each of the mounting columns (12);
the brush holder (2) is provided with a mounting hole (24); and
a screw bolt is inserted into the mounting hole (24) of the brush holder (2) and is screwed into the threaded hole (13) for locking the brush holder (2) on the end cover (1).

3. The end cover assembly of claim 1, **characterized in that**
a through hole (25) is arranged on a middle part of the brush holder (2);
the brush box (26) is disposed on two sides of the through hole (25); and
the brush box (26) is disposed inside the cavity (4).

4. The end cover assembly of claim 4, **characterized in that**
a lug boss (27) is arranged on the brush holder (2) close to one side of the brush box (26);
a spring comprising two ends (28) is wound on the lug boss (27); and
one end of the spring (28) is clamped on the brush box (26), and the other end of the spring (28) presses against a rear part of the brush (21).

5. The end cover assembly of claim 1, **characterized in that**
the electronic component comprises: a capacitor (31), an inductor (32), and a sensor (33); and
the capacitor (31), the inductor (32), and the sensor (33) are arranged on the circuit board (3) inside the cavity (4) by welding.

## Patentansprüche

1. Abschlussdeckel-Baugruppe für einen Bürstenmotor, wobei die Abschlussdeckel-Baugruppe Folgendes umfasst:
a) einen Abschlussdeckel (1),
b) eine Bürste (21), wobei die Bürste (21) in einem Bürstenhalterkasten (26) eingebettet ist,
c) eine Leiterplatte (3), wobei die Leiterplatte (3) eine obere Fläche, eine untere Fläche und ein elektronisches Bauelement umfasst,
**dadurch gekennzeichnet, dass**
die Abschlussdeckel-Baugruppe ferner einen Bürstenhalter (2), eine Vielzahl von Lagerstützen (22) und eine Vielzahl von Klemmen (23) umfasst und der Bürstenhalter (2) eine obere Fläche umfasst,
ein unteres Ende jeder der Vielzahl von Lagerstützen (22) auf der oberen Fläche des Bürstenhalters (2) angeordnet ist und ein oberes Ende jeder der Vielzahl von Lagerstützen (22) auf der unteren Fläche der Leiterplatte (3) angeordnet ist,
ein unteres Ende jeder der Vielzahl von Klemmen (23) auf der oberen Fläche des Bürstenhalters (2) angeordnet ist und ein oberes Ende jeder der Vielzahl von Klemmen (23) auf der oberen Fläche der Leiterplatte (3) angeordnet ist,
die Leiterplatte (3) durch das obere Ende jeder der Vielzahl von Lagerstützen (22) und das obere Ende jeder der Vielzahl von Klemmen (23) festgeklemmt wird,
der Bürstenhalter (2) auf dem Abschlussdeckel (1) angeordnet ist,
der Bürstenhalterkasten (26) und die Bürste (21) auf der oberen Fläche des Bürstenhalters (2) angeordnet sind und das elektronische Bauelement auf der unteren Fläche der Leiterplatte (3) angeordnet ist,
der Bürstenhalter (2) und die Leiterplatte (3) durch die Vielzahl von Lagerstützen (22) beabstandet sind und ein Hohlraum (4) zwischen der Leiterplatte (3) und dem Bürstenhalter (2) geformt ist und
die Bürste (21) in elektrischer Verbindung mit der Leiterplatte (3) steht.

2. Abschlussdeckel-Baugruppe nach Anspruch 1, **dadurch gekennzeichnet, dass**
eine Lagerkammer (11) an einem mittleren Teil des Abschlussdeckels (1) angeordnet ist,
eine untere Fläche des Abschlussdeckels (1) außerhalb der Lagerkammer (11) konvex ist, um eine Vielzahl von Anbringungssäulen (12) zu bilden,
ein Gewindeloch (13) an einem mittleren Teil jeder der Anbringungssäulen (12) angeordnet ist,
der Bürstenhalter (2) mit einem Anbringungsloch (24) versehen ist und
ein Schraubenbolzen in das Anbringungsloch (24) des Bürstenhalters (2) eingesetzt ist und in das Gewindeloch (13) geschraubt ist, um den Bürstenhalter (2) auf dem Abschlussdeckel (1) zu sichern.

3. Abschlussdeckel-Baugruppe nach Anspruch 1, **dadurch gekennzeichnet, dass**
ein Durchgangsloch (25) an einem mittleren Teil des Bürstenhalters (2) angeordnet ist,
der Bürstenhalterkasten (26) auf zwei Seiten des Durchgangslochs (25) angeordnet ist und
der Bürstenhalterkasten (26) innerhalb des Hohlraums (4) angeordnet ist.

4. Abschlussdeckel-Baugruppe nach Anspruch 4, **dadurch gekennzeichnet, dass**
ein Stützvorsprung (27) an dem Bürstenhalter (2) nahe einer Seite des Bürstenhalterkastens (26) angeordnet ist,
eine Feder (28), die zwei Enden umfasst, auf den Stützvorsprung (27) gewickelt ist und
das eine Ende der Feder (28) an dem Bürstenhalterkasten (26) festgeklemmt ist und das andere Ende der Feder (28) gegen einen hinteren Teil der Bürste (21) presst.

5. Abschlussdeckel-Baugruppe nach Anspruch 1, **dadurch gekennzeichnet, dass**
das elektronische Bauelement Folgendes umfasst: einen Kondensator (31), eine Induktionsspule (32) und einen Sensor (33),
der Kondensator (31), die Induktionsspule (32) und der Sensor (33) auf der Leiterplatte (3) innerhalb des Hohlraums (4) durch Schweißen angeordnet sind.

## Revendications

1. Ensemble de capot terminal pour un moteur à balai, l'ensemble de capot terminal comprenant :
a) un capot terminal (1) ;
b) un balai (21), le balai (21) étant intégré dans une cage à balai (26) ; et
c) une carte de circuit (3), la carte de circuit (3) comprenant une surface inférieure, une surface supérieure et un composant électronique ;
**caractérisé en ce que**
l'ensemble de capot terminal comprend en outre un porte-balai (2), une pluralité de supports de palier (22) et une pluralité de colliers (23), et le porte-balai (2) comprenant une surface supérieure ;
une extrémité inférieure de chacun parmi la pluralité de supports de palier (22) est disposée sur la surface supérieure du porte-balai (2), et une extrémité supérieure de chacun parmi la pluralité de supports de palier (22) est disposée sur la surface inférieure de la carte de circuit (3) ;
une extrémité inférieure de chacun parmi la pluralité de colliers (23) est disposée sur la surface supérieure du porte-balai (2), et une extrémité supérieure de chacun parmi la pluralité de colliers (23) est disposée sur la surface supérieure de la carte de circuit (3) ;
la carte de circuit (3) est serrée par l'extrémité supérieure de chacun parmi la pluralité de supports de palier (22) et l'extrémité supérieure de chacun parmi la pluralité de colliers (23) ;
le porte-balai (2) est disposé sur le capot terminal (1) ;
la cage à balai (26) et la balai (21) sont disposés sur la surface supérieure du porte-balai (2), et le composant électronique est disposé sur la surface inférieure de la carte de circuit (3) ;
le porte-balai (2) et la carte de circuit (3) sont espacés par la pluralité de supports de palier (22), et une cavité (4) est formée entre la carte de circuit (3) et le porte-balai (2) ; et
le balai (21) est en connexion électrique avec la carte de circuit (3).

2. Ensemble de capot terminal selon la revendication 1, **caractérisé en ce que**
une chambre de palier (11) est disposée sur une partie centrale du capot terminal (1) ;
une surface inférieure du capot terminal (1) à l'extérieur de la chambre de palier (11) est convexe pour former une pluralité de colonnes de montage (12) ;
un trou fileté (13) est disposé sur une partie centrale de chacune des colonnes de montage (12) ;
le porte-balai (2) est doté d'un trou de montage (24) ; et
un boulon fileté est inséré dans le trou de montage (24) du porte-balai (2) et vissé dans le trou fileté (13) pour verrouiller le porte-balai (2) sur le capot terminal (1).

3. Ensemble de capot terminal selon la revendication 1, **caractérisé en ce que**
un trou traversant (25) est agencé sur une partie centrale du porte-balai (2) ;
la cage à balai (26) est disposée sur deux côtés du trou traversant (25) ; et
la cage à balai (26) est disposée à l'intérieur de la cavité (4).

4. Ensemble de capot terminal selon la revendication 4, **caractérisé en ce que**
un bossage de patte (27) est agencé sur le porte-balai (2), à proximité d'un côté de la cage à balai (26) ;
un ressort comprenant deux extrémités (28) est enroulé sur le bossage de patte (27) ; et
une extrémité du ressort (28) est serrée sur la cage à balai (26), et l'autre extrémité du ressort (28) appuie contre une partie arrière du balai (21).

5. Ensemble de capot terminal selon la revendication 1, **caractérisé en ce que**
le composant électronique comprend : un condensateur (31), un inducteur (32) et un capteur (33) ; et
le condensateur (31), l'inducteur (32) et le capteur (33) sont agencés sur la carte de circuit (3) à l'intérieur de la cavité (4) par soudage.
